Europäisches Patentamt

European Patent Office

Office européen des brevets

(11) Publication number: **0 476 518 A1**

# EUROPEAN PATENT APPLICATION

(21) Application number: **91115451.6**

(22) Date of filing: **12.09.91**

(51) Int. Cl.⁵: **F16K 1/30, F17C 13/04**

(30) Priority: **20.09.90 IT 2152090**

(43) Date of publication of application:
**25.03.92 Bulletin 92/13**

(84) Designated Contracting States:
**BE DE FR GB LU NL**

(71) Applicant: **LEVIADO S.r.l.**
**Via Carlo Zima 49**
**I-25065 Lumezzane S.S. (Brescia)(IT)**

(72) Inventor: **Leo, Leonardo**
**Via Carlo Zima 49**
**I- 25065 Lumezzane S.S. (Brescia)(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) **Valve assembly particularly for gas containers.**

(57) A valve assembly for gas containers for preventing unauthorized fillings includes a body which can be coupled to a container and defines a gas duct which is controlled by a shutter (5) which can be actuated from the outside of the body. The peculiarity of the invention is constituted by the fact that it includes one-way valve means (10) with presettable contrast which are suitable for allowing to deliver gas from the container until a presettable internal residual pressure value is reached. An inlet connection (30) for the filling of the container is furthermore provided and is removably engageable with the one-way valve means.

Fig.1

The present invention relates to a valve assembly, particularly for gas containers, for preventing unauthorized fillings.

It is a strongly felt problem that of correctly filling containers of compressed, liquefied and dissolved gases.

It is in fact not infrequent to fill containers with gases which are for example not compatible with one another, creating dangerous mixtures.

Another problem is the one related to the fact that with the valve assemblies currently in use, the inside of the container might be contaminated, once the gas contained therein has been delivered, due to the fact that contaminating agents of any kind can enter if the valve or tap is left open.

This fact causes the need to perform a precautionary "washing" of the inside of the container before filling with new gas.

The aim of the invention is indeed to eliminate the above described disadvantages by providing a valve assembly suitable for preventing unauthorized fillings, particularly for containers of compressed, liquefied and dissolved gases, which requires a specifically designed connecting inlet so as to prevent the undue filling of the container.

Within the scope of the above aim, a particular object of the invention is to provide a valve assembly which automatically keeps the connection between the inside of the container and the outside closed when the contained product has been delivered, thus preventing undue infiltrations toward the inside of the container, with the consequent advantage that it is not necessary to perform the precautionary washing of the inside of the container.

Another object of the present invention is to provide a valve assembly which, by virtue of its peculiar constructive features is reliable and safe in use.

Not least object of the present invention is to provide a valve assembly which can be easily obtained starting from commonly commercially available elements and materials and is furthermore competitive from a merely economical point of view.

This aim, these objects and others which will become apparent hereinafter are achieved by a valve assembly, particularly for gas containers, comprising a body which can be coupled to a container and having a gas duct which is controlled by a shutter which can be actuated from the outside of said body, characterized in that it comprises one-way valve means with presettable contrast suitable for allowing to deliver gas from said container until a presettable internal residual pressure value is reached, an inlet connection for the filling of said container being furthermore provided and being removably engageable with said one-way valve means.

Further characteristics and advantages will become apparent from the description of a preferred but not exclusive embodiment of a valve assembly for gas containers, illustrated only by way of non-limitative example in the accompanying drawings, wherein:

figure 1 is a schematic sectional view of the valve assembly body;

figure 2 is a sectional view of the inlet connection;

figure 3 is a sectional view taken along the line III-III of figure 2;

figure 4 is a schematic perspective view of the lever of the inlet connection which can be actuated to fill a container;

figure 5 is a schematic view of the inlet connection applied to the body, in the initial coupling step;

figure 6 is a view of the inlet connection coupled to the body;

figure 7 is a sectional view of the inlet connection coupled to the body during the step of filling the container.

With reference to the above figures, the valve assembly, according to the invention, comprises a body, generally indicated by the reference numeral 1, which has, in a per se known manner, a threaded conical tang or nipple 2 for connection to a container of compressed, liquefied or dissolved gas, not illustrated in the drawings.

Nipple 2 has a gas duct 3 which has an opening 4 controlled by a shutter 5 which can move so as to open and close by virtue of the actuation of a conventional knob, generally indicated by the reference numeral 6.

The peculiarity of the invention is constituted by the fact that one-way valve means with presettable contrast, generally indicated by the reference numeral 10, are provided on the duct 3 downstream with respect to the opening 4 in the gas delivery direction.

Said valve means have a shutter stem 11 with a hemispherical dome 12 which abuts on an auxiliary opening 13 defined by the body 2.

In the abutment region, the shutter dome 12 has a sealing gasket indicated by 14.

The stem 11 is slidingly guided by a perforated washer 18 which is fixed inside the inlet 19 where the one-way valve means is provided.

The perforated washer 18 acts as abutment for presettable elastic means constituted by a spring 20 which pushes the shutter dome 12 into sealing abutment against the auxiliary opening 13 and closes when the residual pressure inside the container drops below a value which can be preset according to the setting of the spring 20.

With this arrangement, it is thus possible to deliver gas from the container until a presettable residual pressure value remains inside the container; below said pressure it is no longer possible to perform delivery, since the one-way valve means closes.

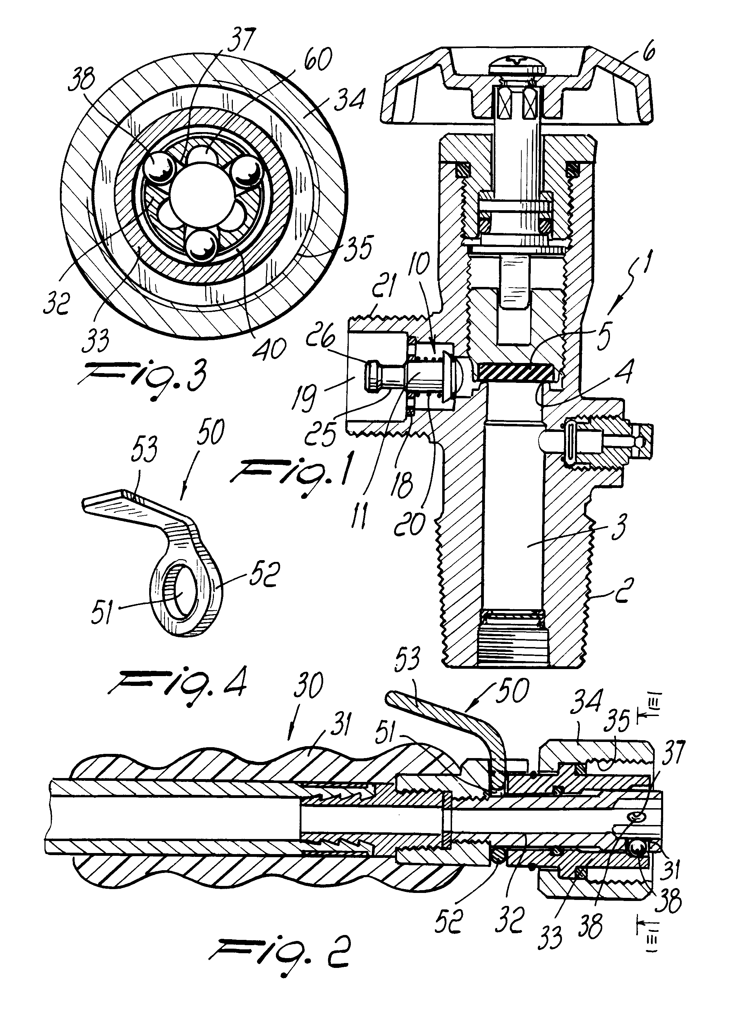

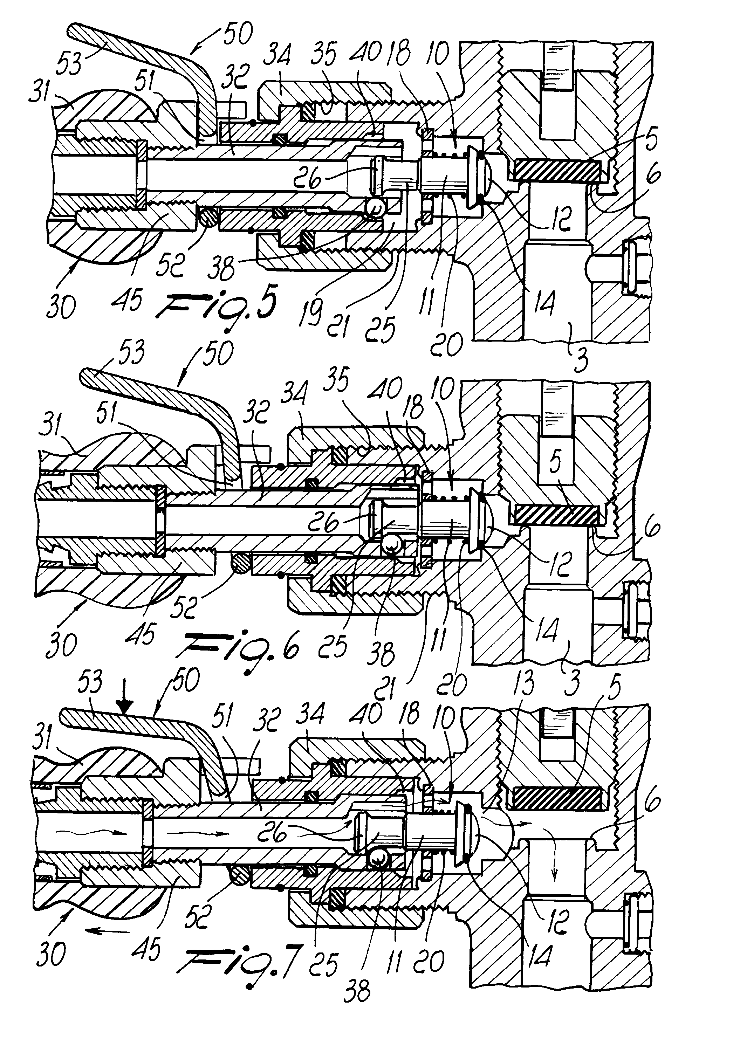

In order to be able to fill the container there is an inlet connection, generally indicated by the reference numeral 30 and illustrated in figures 2 to 7, which in practice has the specific function of allowing to open the one-way valve means during the filling step.

The inlet 30 has a grip element 31 to which an inner tubular element 32, provided with means for coupling to the stem 11 of the one-way valve means, is connected.

More precisely, the inner tubular element 32 is slidingly and sealingly mounted inside an intermediate sleeve 33 to which an outer coupling or nut 34, provided with an internal thread 35 to couple to the outer thread 21 of the inlet 19, is rotatably connected.

The inner tubular element has, at its free end, a plurality of radial holes 37 in which locking balls 38 are mounted; said balls can couple, as will become apparent hereinafter, to a tapered portion 25 which is defined at the free end of the stem 11 and is flanked by the head or expansion 26 located on the free end.

In order to perform the coupling, as more clearly shown in figure 5, the intermediate sleeve 33 has a countersink 40 at its free end; the balls 38 can be inserted in the countersink in a radially expanded position during the first step of screwing of the coupling 34 on the inlet 19.

In this step, in practice the balls 38 can pass beyond the head 26 of the stem 11.

As the screwing of the coupling continues, in practice a relative translatory motion is performed between the intermediate sleeve 33 and the inner tubular element 32, so that the balls 38, by engaging with the inner surface of the sleeve 33, which has no countersink, are pushed in a radial direction, in practice contracting against the tapered portion 25 and rigidly associating the inner tubular element with the stem 11.

In this position, which is clearly illustrated in figure 6, the inlet connection is engaged with the valve means.

The inlet connection has, between the outer axial end of the sleeve 33 and the abutment element 45 of the handgrip 31, to which the inner tubular element is rigidly connected, an actuation lever, which is indicated by 50, and in practice has an enlarged hole 51 defined in the active arm 52, interposed between the sleeve 33 and the abutment 45; a lever-shaped portion 53 is connected to the actuation arm and remains accessible outside, by handgrip 31.

By exerting a pressing action on the lever portion 53, the actuation arm 52 is caused to oscillate and, by abutting between the abutment 45 and the sleeve 33, generates a translatory motion in the direction of the rearward motion of the tubular element, with consequent opening of the shutter stem 11, which is rigidly associated with the inner tubular element 32.

In these conditions, illustrated in figure 7, it is possible to fill the container; the gas can flow through openings 60 which are interposed between the balls 38 on the inner end of the tubular element 32; the gas can thus enter the inlet 19 and from there enter the container, since the shutter stem is kept in open position.

From what has been described above, it can thus be seen that the invention achieves the proposed aim and objects, and in particular the fact is stressed that the presence of the one-way valve means, which maintain the container sealed also by virtue of the presence of the O-ring 14, when the residual pressure inside the container has dropped below a selected value, does not allow in any way to create contaminations or in any case infiltrations of foreign matter inside the container.

The presence of the one-way valve means furthermore requires an appropriate inlet connection which allows to open the one-way valve means in order to fill the container, thus obtaining the assurance that the filling of the container can be performed only by authorized persons.

The valve assembly according to the invention is susceptible to numerous modifications and variations, all of which are within the scope of the inventive concept.

Thus, for example, the means for engagement between the inlet connection for filling and the one-way valve means can have a clamp element which couples to the stem.

The actuation lever 50 which performs the translatory motion of the inner tubular element can furthermore be replaced with a pneumatic element and with other means which perform the same function.

All the details may furthermore be replaced with other technically equivalent elements.

In practice, the materials employed, as well as the dimensions and the contingent shapes, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

**Claims**

1. Valve assembly, particularly for gas containers, comprising a body (1) which can be coupled to a container and having a gas duct (3) which is controlled by a shutter (5) which can be actuated from the outside of said body, characterized in that it comprises one-way valve means (10) with presettable contrast suitable for allowing to deliver gas from said container until a presettable internal residual pressure value is reached, an inlet connection (30) for the filling of said container being furthermore provided and being removably engageable with said one-way valve means.

2. Valve assembly according to claim 1, characterized in that said one-way valve means (10) are arranged in said body after the opening controlled by said shutter in the gas delivery direction.

3. Valve assembly according to the preceding claims, characterized in that said one-way valve means comprise a shutter stem (11) which is slidingly supported by a perforated washer (18) provided in an inlet (19) defined by said body, said shutter stem having a shutter dome (12) which can be sealingly engaged against an auxiliary opening (13) defined on said duct.

4. Valve assembly, according to one or more of the preceding claims, characterized in that it comprises presettable elastic means which are constituted by a spring (20) which acts between said perforated washer and said shutter dome.

5. Valve assembly, according to one or more of the preceding claims, characterized in that it comprises a sealing gasket (14) supported by said shutter dome.

6. Valve assembly, according to one or more of the preceding claims, characterized in that said inlet connection has an inner tubular element (32) which is rigidly connected to a grip element (31) and has, at its free end, balls (38) which can move in a radial direction and are removably engageable in a recess which is defined by said shutter stem and is flanked by either one of the head and outer end of said shutter stem.

7. Valve assembly, according to one or more of the preceding claims, characterized in that said inner tubular element is slidingly sealingly supported inside a sleeve (33) which rotatably supports a coupling (34) which can be sealingly coupled to said inlet, said intermediate sleeve having, at its free end, a countersink (40) suitable for allowing the radial expansion of said balls for the insertion of said balls beyond said head of said shutter stem, in said recess.

8. Valve assembly, according to one or more of the preceding claims, characterized in that it comprises an actuation lever (50) which is interposed between the axial end of said intermediate sleeve and an abutment (45) which is rigidly associated with said handgrip, said actuation lever having an actuation arm (52) which is provided with a passage hole (51) which can be engaged around said tubular element, a lever-shaped portion (53) being connected to said actuation arm, said actuation arm being able to oscillate, abutting between said abutment and said sleeve, to generate the translatory motion of said inner tubular element with respect to said sleeve with the consequent opening of said shutter stem.

9. Valve assembly, according to one or more of the preceding claims, characterized in that the means for engagement between said inlet connection and said one-way valve means comprise a clamp element which can be removably coupled to said shutter stem.

10. Valve assembly, according to one or more of the preceding claims, characterized in that it comprises a pneumatic element for performing the translatory motion of said internal tubular element with respect to said intermediate sleeve.

_Fig. 3_

_Fig. 1_

_Fig. 4_

_Fig. 2_

EP 0 476 518 A1

Fig.5

Fig.6

Fig.7

6

European
Patent Office

EUROPEAN SEARCH
REPORT

Application Number

EP 91 11 5451

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 210 168   (YONEZAWA)<br>* column 1, line 1 - column 7, line 20; figures 1-7 * *<br>− − − | 1,2,4,5 | F 16 K 1/30<br>F 17 C 13/04 |
| A | FR-A-2 371 634   (AGA)<br>* the whole document * *<br>− − − − − | 1-4 | |

TECHNICAL FIELDS
SEARCHED (Int. Cl.5)

F 16 K
F 17 C

The present search report has been drawn up for all claims

| Place of search | Date of completion of search | Examiner |
|---|---|---|
| The Hague | 10 January 92 | CHRISTENSEN C.W. |